# EUROPEAN PATENT APPLICATION

(11) **EP 4 663 333 A1**
(43) Date of publication of application: **17.12.2025**
(21) Application number: 24181292.4
(22) Date of filing: 11.06.2024
(51) Int. Cl.: B23K 26/03, B23K 26/082, B23K 26/08, B23K 26/352, B23K 26/362, B23K 26/382, B23K 37/02

(54) **LASER MACHINING METHOD AND LASER MACHINE TOOL FOR MACHINING A TEXTURE OR A CAVITY ON A WORKPIECE**

(71) Applicant: United Machining Mill SA, 1217 Meyrin 1 (CH)
(72) Inventor: Conseil, David, 74160 Collonges-sous-Salève (FR); Lotto, Davide, 1201 Genève (CH); Jaques, Fabrice, 1242 Satigny (CH)
(74) Representative: Arend, Christa

(57) **Abstract**

The present invention is related to a laser machining method for engraving a texture or a cavity on a workpiece (5) by a machine tool, wherein the machine tool includes a machine table for mounting the workpiece (5) thereon and a laser head for emitting a laser beam on the workpiece (5), wherein the laser beam is directed by a laser galvo scanner integrated in the laser head to reach a defined position on the workpiece (5), wherein the machine tool further comprises a control unit configured to control the movement of the laser head and the laser galvo scanner. The method comprises: a. calculating before machining a machining path based on the geometry of the workpiece (5) and the texture or the cavity, wherein the machining path defines a sequence of relative positions of the laser head in relation to the workpiece (5), wherein calculating the machining path includes the steps of calculating a plurality of machining layers to be machined in succession and calculating for each layer a plurality of laser toolpaths defining the positions to be ablated by the laser beam; b. receiving the machining path by the control unit for ablating the workpiece; c. ablating the workpiece (5) layer by layer; d. adjusting the machining path after machining at least one layer including: i. scanning a defined machined area on the surface of the workpiece (5) by a measuring device to obtain the machined depth at a plurality of positions on the machined area; ii. comparing the measured machined depth with a defined target depth at the plurality of positions on the machined area to determine depth deviation; and iii. recalculating at least partially the machining path based on the determined depth deviation; and e. applying the recalculated machining path to ablate the remaining layers of the workpiece (5).

## Description

### FIELD OF THE INVENTION

The present invention is related to a laser machining method for machining a texture or a cavity on a workpiece. In further, the present invention is related to a laser machine tool for engraving a texture or a cavity on the workpiece.

### BACKGROUND OF INVENTION

Laser ablation methods are widely used for engraving a texture on the surface of a physical object by sublimating the material on the surface of the object. The principle used to produce the desired structure, or texture, on the surface of the object is described for instance in the document DE 42 09 933 A1. The process can be seen as "inverted stereolithography": instead of raising the coats for building, the material is sublimated layer by layer by the laser machining as described for instance as well in the further publication, the EP 1189724 A1

Machine tools for machining the objects by laser ablation are well known as well. The European patent application EP 2 301 706 A1 describes for instance a possible technical design of such an apparatus.

A complete texturing machining of the surface of the object consists in ablating a plurality machining layers, with, for each layer, a set of positions that the machining head must reach, so as to machine a patch for each position for the layer concerned. The software always considers the actual and real three-dimensional shape of the object surface and the texture to be applied thereto.

Thus, before the machining, a machining file including machining data must be generated based on the geometry of the object and the texture or cavity to be machined thereon. A control unit of the machine tool can read the machining file to control the movement of the laser beam emitted by the laser head, since the machining file defines where the material should be removed. The generated machining file essentially consists of a machining path, which comprises a succession of positions that the laser machining head must occupy in relation to the object, and, for each position, a succession of ablation operations corresponding to the scanning that the laser beam must perform from this position. This result directly influences both the machining time and the finishing quality of the texturing.

Preparation of the machining file includes modeling the geometry of the object and analyzing image file defining the texture. The machining file must be generated by considering the texture, respectively the image and the geometry of the object. Thus, the object is normally modelled numerically by a meshing of usually triangles to generate a 3-D modelling file, for example, the object-geometry data is a mesh file. Additionally, the texture or cavity cannot be engraved on the object in one go because the laser beam can only reach a limited depth. Thus, the machining is conducted layer by layer. During the preparation of the machining file, the object is modelled, and the model is divided into a plurality of so-called machining layers.

The textures defined by the image files are additionally applied respectively processed by the software to the mesh file of the modeled 3D-surface of the object. The grey level image representing a three-dimensional texture is composed by a multiplicity of individual pixels, whereby the depth of a position in the texture is defined as a corresponding grey level of the corresponding pixel. The lighter a pixel, the less deep is the texture at that specific point. The darker the pixel, the deeper is the texture at that specific position. Preferably, the number of grey levels corresponds to the number of applied layers. By that, the grey level image defines for each layer if a specific point needs to be ablated or not during the machining of that layer. If a pixel on the grey level image is equal or darker than the grey level of the specific processed layer, then the corresponding point needs to be ablated. If a pixel in the grey level image is lighter than the grey level of that specific layer, then the corresponding point must not to be ablated. A white pixel or area represents consequently a point or area of the texture surface with no deepness. This means, the point of texture corresponds at that position to the unmachined surface and no laser ablation has to occur there. Based on the mapping of the texture on the modeled object, the so-called laser toolpaths are determined for each of machining layer.

If a cavity must be machined, a CAD file can be prepared for modelling the cavity. The volume to be ablated to form the cavity can be computed based on the CAD file. Additionally, the machining layers can be computed based on the CAD file. For laser machining, in order to reach the precise depth of the area to be ablated, the removal rate of the laser parameter must be precisely known. If the removal rate is not precise enough or if the removal is not homogenous, the machined bottom cavity is inaccurate. One problem often raised in the laser machining is the depth inaccuracy. The machined depth deviates from the target depth. Another problem is the planarity of the machined surface. Especially, since the machining is conducted layer by layer, the inaccuracy occurred already on one machined layer can be accumulated onto the next layer and cause more inaccuracy.

Until now, the machining file is determined before machining and applied for the whole machining process without any adjustment during the machining. Thus, there is no possibilities to correct the inaccuracy of the machined part in-situ and already during the machining.

EP 3 875 206 discloses a processing system and a processing method. The processing system includes a housing that houses an object; a processing apparatus that is disposed in the housing and that processes the object; a measurement apparatus that is disposed in the housing and that measures the object processed by the processing apparatus; and a control apparatus that set a processing condition by using a measured result of the object.

However, the measured result of the object is not applied to improve the accuracy of the machined area.

### SUMMARY OF THE INVENTION

It is an objective of this invention to provide a laser machining method for engraving a texture or a cavity on a workpiece by a machine tool with improved accuracy of the machined part. It is an objective of this invention to provide a laser machining method for engraving a texture or a cavity on a workpiece by a machine tool which enables a machining path adjustment in real time.

According to the present invention, these objectives are achieved through the features of independent claims. In addition, further advantageous embodiments follow from the dependent claims and the description.

The present invention is related to a laser machining method for engraving a texture or a cavity on a workpiece by a machine tool, in particular a 5-axis laser machine tool. The laser machine tool includes a machine table for mounting the workpiece thereon and a laser head for emitting a laser beam on the workpiece. The laser beam is directed by a laser galvo scanner integrated in the laser head to reach a defined position on the workpiece. The machine tool further comprises a control unit configured to control the movement the laser head and the laser galvo scanner.

The method comprises the steps of: calculating before machining a machining path based on the geometry of the workpiece and the texture or the cavity; receiving the initial machining path by the control unit for ablating the workpiece; and ablating the workpiece layer by layer. The machining path defines a sequence of relative positions of the laser head in relation to the workpiece. Calculating the initial machining path includes the steps of: calculating a plurality of machining layers to be machined in succession and calculating for each layer a plurality laser toolpath defining the positions to be ablated by the laser beam.

The method further comprises adjusting the machining path after machining at least one layer. Adjusting the machining path includes the steps of: scanning a defined machined area on the surface of the workpiece by a measuring device to obtain the machined depths at a plurality of positions on the machined area; comparing the measured machined depth with a defined target depth to determine a depth deviation for each measured position; and recalculating at least partially the machining path based on the determined depth deviation.

Additionally, the method comprises the step of applying the recalculated machining path to ablate the remaining layers.

The present invention can be applied not only for machining texture on the workpiece but also for machining one or more cavities on the workpiece. The dimension of the cavity can vary in a large range from small cavities having the volumes of several µm³ to large cavities having the volumes of several cm³ and more. For most of the applications, the machine cavity should achieve a high precision, for example in the range of several micrometer.

Before machining a machining file is prepared to determine the machining path and the machining parameters applied for ablating the workpiece. Normally, the machining file is determined by a processing unit arranged at the outside of the machine tool and transferred into the control unit of the machine tool. The control unit is configured to control the mechanical axes and the laser galvo scanner to direct the laser beam to ablate the workpiece layer by layer.

In known method, the machining path is not adjustable during the whole machining. Namely, when the program describing the machining path is loaded into the control unit, the program is performed by the control unit without any changes. Therefore, any inaccuracy or even errors occurred on the workpiece under machining during the machining cannot be compensated or corrected. The goal of the present invention is to provide the possibility to monitor the machining process in a real-time and react on the monitored result. In particular, the quality of the machined part is monitored during the machining such that a real-time error correction is allowable. By this way, an adaptive machining is achieved. This provides the advantage that certain inaccuracy or errors occurred in the previous stage of the machining can be compensated or corrected during the rest of the machining. In particular, the geometrical inaccuracy or geometrical error of the engraved surface can be detected already during an early stage of the machining and corrected or compensated during the rest of machining. Hence, the geometrical accuracy of the engraved texture or cavity can be improved, since the real machined surface is taken into account during the subsequent machining phase.

The laser ablation machining is conducted in a multiplicity of process steps in which the surface structure is machined layer wise. Thus, the machining path includes a plurality of machining layers to be machined in succession. On each layer, the ablation areas are determined. Additionally, on each layer a plurality of laser toolpaths are determined to define the positions where the materials should be removed. There are different laser machining types, for example so-called vector-liked laser machining and blasting. For vector-liked laser machining, the laser toolpaths to be ablated includes a plurality of laser vectors. The laser vectors define the positions where the laser beam should be emitted. For ablating the corresponding area, the laser beam is emitted along the laser vectors from one end to another end of the vector and vector by vector.

After machining one layer or more layers the machining path adjustment is conducted. Preferably, the ablation is first stopped before conducting the machining path adjustment. The partially machined surface of the workpiece is scanned by a measuring device. It is possible to scan the whole surface or a defined area of the surface.

Since texture or cavity to be engraved on the workpiece are normally three dimensional, the surface topology represents the space structure of the texture or cavity formed on the workpiece. A target surface topology is specified before the machining. The target surface topology is associated with the texture or the cavity. The measured surface topology scanned by the measuring device shows an intermediate state of the texture or cavity machined on the workpiece. The goal is to have a final machined part having a surface topology corresponding to the specified target surface topology. Thus, the measured surface topology is compared with the target surface topology in order to determine if the remaining machining can be conducted by applying the initially determined machining path or modification of the initially determined machining path for the remaining machining is required. The deviation between the measured surface topology and the target topology provides the information regarding the geometrical inaccuracy of the machined part at this machining stage. Since this is conducted before removing the entire material as defined, it is still possible to correct this inaccuracy during the remaining machining process by removing more or less material as initially designed. This is achieved by recalculating the machining path and applying the recalculated machining path for the remaining machining process.

The target surface topology defines the target depths at different positions on the surface. The measuring unit is configured to measure the depth of the engraved texture or cavity at the different positions of the surface to obtain the surface topology. The scanning allows to obtain the machined depth information of all scanned area. This information can be analysed to determine if the machined depth corresponds the specified target depth at each position of the surface. The measured depth is compared with the target depth at each position to determine the depth deviation. The depth deviation represents the inaccuracy of the machining, in particular the material removal at this stage. This provides the input for correction.

In one variant, recalculating the machining path includes recalculating at least one machining layer and recalculating at least partially the laser toolpaths on this layer.

If the measured depth deviates from the target depth at one position on the machined area, it means that either too much material is removed or too less material is removed at this position. Thus, in order to correct this error, the respective machining layers are recalculated such that the error can be compensated in the subsequent machining phase. Adapting the machining layers for the remaining machining is a sufficient way to correct the inaccuracy occurred during the previous machining process. How many layers must be adjusted depend on the depth deviation. The larger the depth deviation is, more layers must be adjusted. Moreover, the laser toolpaths on these machining layers are adjusted.

In one variant, if the depth deviation indicates an under-engraving, the machining path is recalculated by adding at least one machining layer to the remaining machining layers and recalculating the laser toolpaths on this layer. The under-engraving occurs when the measured machined depth is smaller than the target depth at one position. The under-engraving means that less material is removed from the workpiece as targeted for this machining stage. If the measured surface topology at a position has a less depth than the target surface topology, this position is identified as under-engraving. In order to compensate the under-engraving, more material must be removed during the remaining machining phase, thus, the machining toolpath must be adapted. Especially, the machining layers must be recalculated by adding additional machining layers to the remaining machining layers. For example, scanning is conducted after machining a number of N machining layers. The remaining machining layers with a number of M are to be ablated. If the under-engraving is occurred, additional layers of a number of L are added to the M machining layers such that the material which should be removed during the machining of N layers but has not been removed yet can be ablated during the machining of these additional layers L. This means, the recalculated remaining layers includes in total M+L layers instead of M as initially designed.

Advantageously, the machining layer is only added to the area where the under-engraving is identified. In order to optimize the machining efficiency, the additional L layers are only added to the area where the under-engraving is identified.

In another variant, if the depth deviation indicates an over-engraving, the machining path is recalculated by removing at least partially the laser toolpaths on at least one machining layer. The over-engraving means that too much material is removed from the workpiece as targeted for this machining stage. If the measured machined depth at a position is larger than the target depth, this position is identified as over-engraving. In order to compensate the over-engraving, less material must be removed during the remaining machining, thus, the machining toolpath must be adapted. This is achieved by removing the initially determined laser toolpaths in the subsequent layers. How many layers are to be adapted is dependent on the depth deviation. Especially, the laser toolpaths for the respective machining area on at least one remaining machining layer must be removed. It is possible that the machining layers must be recalculated by removing machining layers for the respective machining area. For example, scanning is conducted after machining a number of N machining layers. The remaining machining layers with a number M are to be ablated. If the under-engraving is occurred, additional layers with a number L are removed from the M machining layers such that the material which should not be removed during the machining of M layers but already has been removed must not be ablated again during the machining of these additional layers L. This means, the recalculated layers for the over-engraved positions includes in total M-L layers.

Preferably, the machining layer is only removed from the area where the over-engraving is identified.

In particular, under-engraving and over-engraving can occur at the same machining stage but at different areas of the surface. The recalculated machining layers can differ at different areas of the surface. For the under-engraved area the recalculated machining layers include M+L layers. For the over-engraved area, the recalculated machining layers include M-L layers. For other areas, where no depth deviation is identified, the recalculated machining layers remain the same as before scanning.

The method allows to modify the remaining lines of the program defining the machining toolpath taking in account defect detected during the scan. When not enough material is ablated, it adds layers specifically in the zones to ablate. When too much material has been ablated, it trims the remaining machining lines on the zone already over engraved. The number of trimmed/added layers depends on the ablation rate of the laser parameter, which is calculate thanks to the scan and indicates depth per layer.

In an advantageous variant, recalculating the machining path is conducted by modifying at least one machining layer. Thus, it is not necessary to recalculate all the machining layers newly to finish the machining. This can save computation power and save computation time.

In particular, if the under-engraving occurs recalculating the machining path includes copying at least one machining layer, removing the laser toolpaths for ablating the area where no under-engraving is identified and adding the modified machining layer into the remaining machining layers. By copying one already determined machining layer and modifying it the computation time and power can be reduced dramatically. Therefore, the computation can be conducted by a processing unit integrated in the machine tool.

In some embodiments, determining machining toolpath includes defining for each machining layer a plurality of patches intended to be machined from a single position of the laser head and adjusting the machining toolpath includes recalculating the patches of at least one machining layer. Each patch defines an area where can be ablated by maintaining the laser head at one position. This can further optimize the machining time and the quality of the machined part.

The frequency of the adjustment of the machining path has a direct impact on the geometrical accuracy of the final part. The more frequently the machined surface is scanned and the machining path is adjusted, the higher accuracy the final part can achieve. On the other side, the scanning is preferably conducted during the machining pause, the machining time is extended by scanning. Thus, the frequency of the adjustment depends on the machining priority including machining time and accuracy. In one variant, adjusting the machining toolpath is conducted after machining each machining layer. If the correction can be performed after machining each layer, the accuracy of the machined part can be maximized, because each machining error occurred during machining each layer can be immediately corrected.

In one variant, adjusting the machining toolpath is conducted in an irregular manner, wherein the timing of the adjustment depends on the initial machining path, in particular, the number of the adjustment during machining the last half of layers is higher the number of the adjustment during machining the first half of layers. This is a compromise between the machining time and the accuracy of the machined part. The machining path depends on the shape of the texture or cavity. For example, some parts of the texture or cavity require high accuracy and some parts of the texture or cavity require less accuracy. The method provides the possibility to achieve the accuracy requirement without unnecessarily increasing the machining time.

Preferably, the timing of adjusting machining toolpath is determined based on geometry of the texture or the geometry of the cavity.

In particular, the timing of adjusting machining toolpath is determined based on the previous scanning results.

In a preferred variant, scanning is conducted after machining the last machining layer. This measurement provides on one hand the possibility to correct the inaccuracy occurred during the machining last layer and on the other hand the quality of the machined final part.

Preferably, a scanning is conducted before machining. This allows to obtain initial positions of the surface of the workpiece. The workpiece is mounted to the machine table for machining. However, the workpiece is not always perfect. The surface of the workpiece is not perfectly flat. Thus, the measurement result of the scanning may be inaccuracy. If the unmachined surface is scanned, these initial position errors can be compensated later.

Advantageously, the machined depth is calculated relative to the top surface of the workpiece. For example, the Z-position of the surface is measured, and the Z-position of the machined area is measured. The difference between these two positions provides the information of the machined depth. This has the advantage that measured depth is not influenced by the positioning of the workpiece on the machine table or unevenness of the surface of the workpiece.

In particular, scanning is controlled by a control unit of the machine tool based on the machining path and/or the recalculated machining path. In particular, only the area to be machined is scanned.

In an advantageous variant, a cleaning is conducted before the scanning. In order to achieve a good scan of the surface, the part should be sufficiently clean. Dust of the ablated material often pollutes the surface or the cavity. The deeper and smaller the cavity, the most difficult is to clean the cavity from the dust.

In one variant, a dust exhaust system is applied for cleaning. Alternatively, an air blower system is applied for cleaning. It is also possible to apply a gas or a fluid for cleaning.

In some embodiments, laser source parameters are adapted based on the determined depth deviation. By this way, machining can be further optimized. For example, the scanning result can show which machining process including roughing, semi-finishing or finishing has been conducted. Depending on the machining process, the laser source parameters can be adapted.

In one variant, a plurality of set of laser source parameters are predefined. After the scanning, one of the pre-defined sets of laser source parameters is selected in dependency with the scanning result. Many parameters in the laser source need to be tuned to find an ablation parameter that gives interesting outcomes in productivity. For many applications, a balance between ablation productivity and ablation quality must be achieved. The ablation productivity is for example defined by ablation depth per slice µm/slice. The ablation quality is for example defined by the surface roughness Sₐ. During the machining process, according to the outcomes of the surface scanning, the program can adapt itself and not only adapt the machining layers and laser toolpaths, but also laser ablation parameter between a group of different set of parameters.

The present invention is related to a laser machine tool for engraving a texture or a cavity on a workpiece, in particular a 5-axis laser machine tool. The machine tool includes a machine table for mounting the workpiece thereon and a laser head for emitting a laser beam on the workpiece, wherein the laser beam is directed by a laser galvo scanner integrated in the laser head to reach a defined position on the workpiece, the machine tool further comprises a processing unit, a control unit and a measuring device.

The processing unit is configured to determine before machining a machining path including a sequence of relative positions of the laser head in relation to the workpiece by a processing unit, wherein a plurality of machining layers intended to be machined in succession are calculated, and for each machining layer a plurality of laser toolpaths defining the positions to be ablated by the laser beam are calculated. The control unit is configured to apply the defined machining path for ablating the workpiece, wherein the workpiece is ablated layer by layer. The measuring device is configured to scan a defined area on the surface of the workpiece to obtain a machined depth at a plurality of positions on the machined area. The control unit is further configured to compare the measured depth with a target depth to determine the depth deviation and to recalculate the machining path based on the depth deviation.

In one variant, the measuring device is a mechanical sensor such as a contact touch probe. In another variant, the measuring device is an optical sensor such as a 3-D camera, structured light sensor, focus variation sensor, laser sensor, interferometer, optical coherence tomography.

In particular, the measuring device is a distance sensor, a depth sensor, in particular a confocal sensor.

Advantageous, the measuring device is a dot sensor, a line sensor or a field sensor.

Preferably, the measuring device is arranged on the machine head and controlled by the control unit. The measuring device is moved by the mechanical axels of the machine tool, which are controlled by the control unit for controlling the movement of the laser beam. Thus, no additional control unit is required for controlling the measuring device.

In particular, the measuring device is attached in the proximity of the optical scanner used for machining. The measuring device is positioned in a manner that a distance is kept between the sensor axis and the laser machining axis.

Alternatively, the measuring device is positioned in a manner that it can be aligned with the main beam path of the machine. It means that the movement of the measuring device is achieved by moving the optical laser scanner. This can reduce the scanning time since measuring device is moved by the optical axes instead of mechanical axes.

It is possible to provide a dedicated sensor optical scanner for moving the measuring device to scan the surface.

### BRIEF DESCRIPTION OF THE DRAWINGS

A more particular description of the principles briefly described above will be rendered in the following by reference to specific embodiments thereof, which are illustrated in the drawings. These drawings illustrate exemplary embodiments of the disclosure and are not therefore to be considered to limit its scope. The principles of the disclosure are described and explained with details through the use of the accompanying drawings in which:
- Fig. 1:: illustrates a laser machine tool;
- Fig.2:: illustrates a laser head of the laser machine tool;
- Fig.3:: illustrates an image to be ablated on a workpiece;
- Fig.4:: illustrates an ablation area on a machining layer and a plurality of laser toolpaths;
- Fig.5:: illustrates an example of one of the calculated machining layers with corresponding laser toolpaths;
- Fig.6:: illustrates machining layers;
- Fig. 7a, 7b:: illustrate the workpiece before machining and after machining in theory;
- Fig. 8a, 8b:: illustrate the machining method of the state of the art;
- Fig. 9a, 9b, 9c:: illustrate how the machining path is adjusted in accordance with the scanned result during the machining;
- Fig. 10, 11, 12, 13, 14:: illustrate the recalculating the laser toolpaths;
- Fig. 15:: illustrates schematically the machine tool with a measuring device;
- Fig. 16:: illustrates one example of measured depth of the machine area;
- Fig. 17 and 18:: illustrate a machine tool with a workpiece arranged on the machine table.

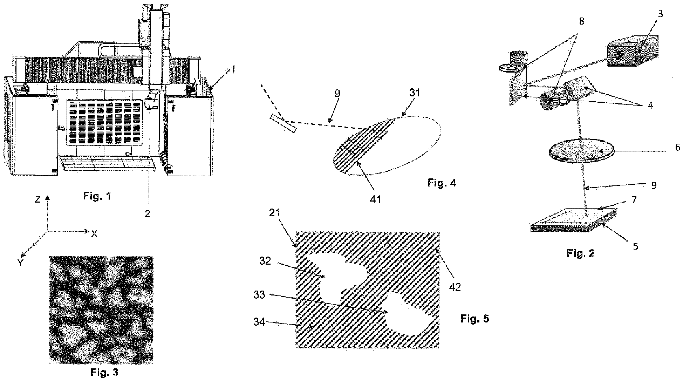

Figure 1 schematically represents an example of a laser machine tool 1 including a laser head 2. The laser head and a workpiece to be machined can be positioned in relation to one another according to 3 or 5 mechanical axes which make it possible to orient the direction of the laser beam emitted and to position the focal point of the laser beam on the surface of a machined workpiece, not represented, placed in the machine. In the example represented in the figure 1, the laser head may be displaced in the three dimensions X, Y and Z of a Cartesian reference frame. Advantageously, the head is also rotatable about two rotation axes to further enhance the accuracy and the flexibility. The laser head comprises devices allowing its rotation about an axis, a laser source, optical devices, and a device commonly called galvo scanner.

Figure 2 schematically illustrates the operation of the laser galvo scanner. The laser source 3 emits a laser beam 9, or more specifically a pulsed laser beam. The laser beam 2 is reflected by mirrors 4 which respectively make it possible to define, according to the axes X and Y of the Cartesian reference frame, the position of the point of projection of the laser beam on the surface of the workpiece 5. Actuators 8 make it possible to control the angular position of the mirrors 4. The laser beam also passes through a lens 6 commonly called F-theta lens. This device thus makes it possible to define the point of impact of the laser beam with the surface 7 of the workpiece 5 in a plane situated in the focal range considered. The focal lengths ranging up to 430 mm are commonplace in the existing machines. The document EP 2 301 706 describes other details of construction of the laser head 2.

Figure 3 illustrates an example of a texture which have to be applied by laser ablation to the surface of the workpiece defined by a grey-scale image.

From the 3D-modelling file which represents the shape of the workpiece and the grey-level texture file, a set of machining layers is therefore usually computed. For each machining layer a plurality of laser toolpaths is calculated to define where the laser beam should be directed to remove the material on the corresponding layer.

For processing the workpiece surface, the laser beam always moves along the predefined parallel laser vectors 41 on the displayed ablation area 31 as shown in the figure 4, jumping at the border of the area to the next position. The figure 4 shows an example that the whole area must be ablated.

Figure 5 shows an example of the calculated machining layer 21 with corresponding laser toolpaths 42. The area 34 covered by the laser vectors is the ablation area, namely the material of this area must be removed. The white areas are the non-ablation areas 32 and, namely no materials must be ablated in these areas.

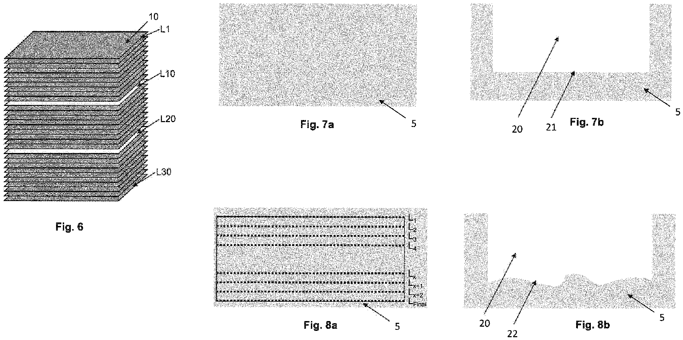

Figure 6 illustrates a plurality of defined machining layers. This is a simplified illustration, thus, the workpiece is illustrated as a cube having a rectangular shape and a flat surface. However, the method of the present invention is not limited to be applied for machining the workpiece having such simple shape. It can be applied to machine workpieces having arbitrary shapes and also curved surface. The model of the workpiece 10 has been divided into for example 30 machining layers L1 to L30. The scanning of the machined surface can be performed in a regular manner or in an irregular manner. In the regular manner, the scanning is performed after machining a defined number of machining layers, for example 10 layers. The machining starts with ablating the first layer L1 and then continues with ablating the succession layers L2 to L10. After machining the first 10 layers, the machined surface is scanned by a measuring device. Based on the measured surface geometry, the machining path is adjusted. Then the machining is continued until another 10 layers are machined using the adjusted machining path. A scanning of the machined surface is then performed again and the machining toolpath is adjusted again. If the scanning is conducted in the irregular manner. The scannings are performed for example after machining the 5^{th} layer, the 7^{th} layer, 11^{th} layer, 20^{th} layer and the 28^{th} layer.

Figures 7a and 7b illustrate an example of machining a cavity 20 on the workpiece 5 in theory. Figure 7a shows the workpiece before the machining and figure 7b shows the machined workpiece. According to the specification, the machined surface in the cavity 21 should be flat as shown in figure 7b. However, in the reality, the machined surface is not flat because of the limitation of the machining accuracy.

Figures 8a and 8b show the state of the art of machining such cavity. The workpiece is machined by layer by layer from L1 to Lfinal. The machined surface 22 in the cavity is not flat because during machining not every position on one machining layer is ablated with the same depth due to laser-material interaction. Applying the method of the present invention, such inaccuracy can be corrected, even during the machining.

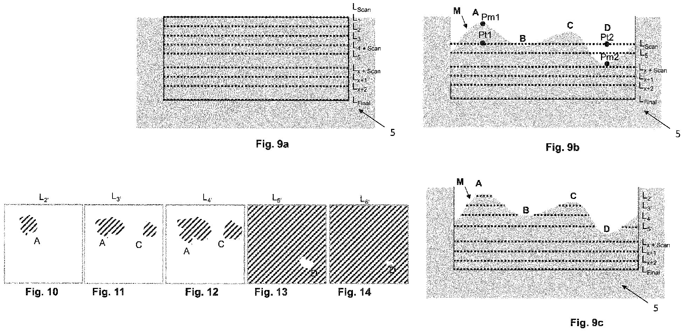

Figures 9a, 9b, 9c and 9d illustrate how the machining path is adjusted in accordance with the scanned result during the machining. For reasons of clarity the figures are illustrated in a simplified manner. For example, the workpiece is depicted in a two-dimensional view and the layers are depicted by lines. Each line represents one machining layer.

Figure 9a shows the situation before the machining. A plurality of machining layers from L1 to Lfinal are computed. Preferably, it is also computed when the surface should be scanned, for example after machining the fourth layer L4 and the layer Lx. In particular, a scan of the surface is conducted before the machining as indicated by the symbol Lscan in the figure 9a. However, it is not mandatory to scan the surface before machining.

Figure 9b shows the situation that the first four layers L1, L2, L3 and L4 are machined and the scanning is conducted just after the machining of the fourth layer L4. The fifth layer L5 is the next layer to be machined. Before machining this layer, a surface scanning is conducted and the machining path is adjusted. The machined surface of the workpiece under machining is scanned by the measuring device. The curve M is a simplified illustration of the measured surface profile, namely the measured machined depth. For each measured position, the measured depth is compared with the target depth defined before the machining. The positions are depicted in the figures in one dimension, namely the depth of the ablation in the z-direction. However, the scanning is a three-dimensional scanning. Thus, the measurement data includes for each position the coordinates of all three dimensions, namely X, Y and Z.

The remaining layers include the fifth layer L5, the sixth layer L6 and all subsequent layers. The machined surface profile indicated by M is also illustrated in the figure 9b. Ideally, the surface profile should be flat over the whole surface. However, the scanning results shows the deviation from the ideal profile. The machined depths over the whole surface are not equal.

As shown in figure 9b, three cases can happen. In the zones A and C, the Z positions depicted by the curve M are higher than the target depths at different positions, which means that the machined depth is smaller than the target depth in these two zones. This indicates an under-engraving. For example, the measured position Pm1 in Z direction is higher than the target position Pt1, because less material is removed as targeted. In the zone D, the Z positions depicted by the curve M are lower than the target depth, which means that the machined depth is larger than the target depth in this zone. This indicates an over-engraving. For example, the measured position Pm2 is lower than the target position Pt2, because more material is removed as targeted. In the zone B, no under-engraving or over-engraving occurs.

Figure 9c shows how to correct the depth error occurred after machining the first four layers. In order to compensate the under-engraving or over-engraving at the zones A, C and D, the machining program is recalculated based on the measured data obtained by the surface scanning. Depending on the scanning result, one layer or several layers must be recalculated. In this example, several layers must be recalculated, namely second layer L2', the third layer L3', the fourth layer L4' and the fifth layer L5'. This example shows that not only the non-machined remaining layer L5 must be recalculated, but also three already machined layers including second layer, third layer and the fourth layer are recalculated. For clarity, the recalculated layers are indicated in the figure 9c as L2', L3', L4' and L5'. The remaining layers Lx until Lfinal are not adjusted. The laser toolpaths calculated before the scanning which are not adjusted are depicted by the dotted lines and the recalculated laser toolpaths after the scanning are depicted by the dash-dotted lines in the figure 9c.

On the adjusted layers, the laser toolpaths are adapted with easy toolpath trimming operation, this means removing the laser toolpaths on the areas where no correction is required. On the second layer L2', the laser toolpaths are trimmed in a way that only the laser toolpaths at the zone A remain since this area must be ablated again to correct the under-engraving. On the third layer L3', the laser toolpaths are trimmed in a way that the laser toolpaths at the both zones A and C remain since these areas must be ablated again to correct the under-engraving. On the fourth layer L4', the laser toolpaths are trimmed in a way that the laser toolpaths at the both zones A and C remain since these areas must be ablated again to correct the under-engraving. The laser toolpaths for ablating the zone A are includes on all three layers, but the size of the areas to be ablated for the zone A can be different on different layers. This can also be seen on the figures 10, 11 and 12. On the fifth layer L5', the laser toolpaths at the zone D are removed to compensate the over-engraving. Since the over-engraving at the zone D is too deep, therefore the sixth layer L6' must also be corrected by removing the laser toolpaths at the zone D. However, the non-ablated area on the sixth layer L6' is smaller than the non-ablated area on the fifth layer L5' at the zone D as shown in the figures 13 and 14.

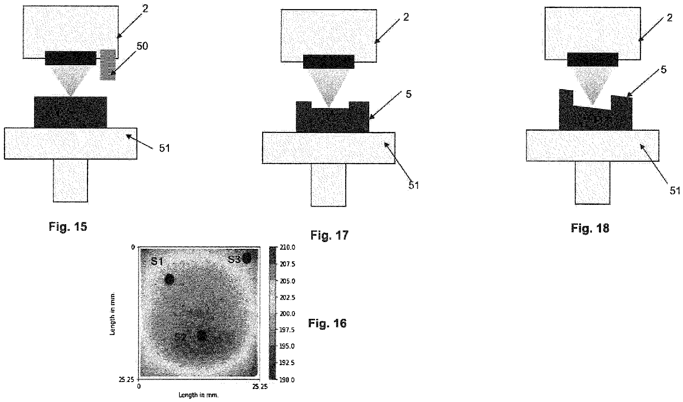

Figure 15 shows the machining area of the machine tool with the integrated measuring device 50. The measuring device is arranged in the proximity of the laser head. During scanning the measuring device is moved along with the laser head, in particular in the horizontal direction. Figure 16 shows a measured depth of the machined area. At the positions S1, S2 and S3, the measured depths are different. The machined depth at S1 is larger than the depth at S3 but smaller than the depth at S2.

Figures 17 and 18 show the problem of surface orientation. If the non-machined workpiece is perfectly prepared, it is perfectly positioned on the machine table 51 as shown in the figure 17. However, in many cases the workpiece is not perfectly prepared, for example as shown in the figure 18, because the upper surface of the workpiece mounted on the machine table has an inclination. To solve this issue, this inclination can be included in the measurement data and can be taken in account. In order to compensate this error, before the machining, the top surface of the workpiece is first scanned. The measurement of this initial surface is stored and applied as a reference for calculating the depth deviation. The machined depths are not the absolute value but the relative value from the scanned top surface of the workpiece.

It is possible to select the surface of the workpiece, in particular the surface to be ablated as the reference or the axis of the machine tool for example the top surface of the machine table as the reference. Figure 17 shows the variant that the top surface of the workpiece is selected as reference. Figure 18 shows the variant that the top surface of the machine table is selected as the reference.

### Reference list

- 1: machine tool
- 2: laser head
- 3: laser source
- 4: mirrors
- 5: workpiece
- 6: lens
- 7: surface of the workpiece
- 8: actuators
- 9: laser beam
- 10: a model of the workpiece
- 20: cavity
- 21: surface of the machined workpiece in theory
- 22: surface of the machined workpiece
- 32, 33: non-ablation area
- 34: ablation area
- 41, 42: laser toolpath
- 50: measuring device
- 51: machine table

## Claims

1. A laser machining method for engraving a texture or a cavity on a workpiece (2) by a machine tool (1), wherein the machine tool includes a machine table (13) for mounting the workpiece thereon and a laser head (2) for emitting a laser beam (9) on the workpiece, wherein the laser beam is directed by a laser galvo scanner integrated in the laser head to reach a defined position on the workpiece, wherein the machine tool further comprises a control unit configured to control the movement of the laser head and the laser galvo scanner, comprising:
a. calculating before machining a machining path based on the geometry of the workpiece and the texture or the cavity, wherein the machining path defines a sequence of relative positions of the laser head in relation to the workpiece, wherein calculating the machining path includes the steps of calculating a plurality of machining layers to be machined in succession and calculating for each layer a plurality of laser toolpaths defining the positions to be ablated by the laser beam;
b. receiving the machining path by the control unit for ablating the workpiece;
c. ablating the workpiece layer by layer;
d. adjusting the machining path after machining at least one layer including:
i. scanning a defined machined area on the surface of the workpiece by a measuring device (50) to obtain the machined depths at a plurality of positions on the machined area;
ii. comparing the measured machined depth with a defined target depth to determine a depth deviation for each measured position; and
iii. recalculating at least partially the machining path based on the determined depth deviation; and
e. applying the recalculated machining path to ablate the remaining machining layers.

2. The laser machining method according to claim 1, wherein recalculating the machining path includes recalculating at least one machining layer and recalculating at least partially the laser toolpaths on this layer.

3. The laser machining method according to claim 1 or 2, wherein if the depth deviation indicates an under-engraving, the machining path is recalculated by adding at least one machining layer to the remaining machining layers and recalculating the laser toolpaths on this layer, wherein the under-engraving occurs when the measured machined depth is smaller than the target depth at one position.

4. The laser machining method according to claim 3, wherein if the depth deviation indicates the under-engraving recalculating the machining path includes copying at least one machining layer, removing the laser toolpaths for ablating the area where no under-engraving is identified and adding this modified machining layer to the remaining machining layers.

5. The laser machining method according to one of claims 1 to 4, wherein if the depth deviation indicates an over-engraving, the machining path is recalculated by removing at least partially the laser toolpaths on at least one machining layer, wherein the over-engraving occurs when the measured machined depth is larger than the target depth at one position.

6. The laser machining method according to one of claims 1 to 5, wherein adjusting the machining path is conducted after machining each machining layer.

7. The laser machining method according to one of claims 1 to 6, wherein adjusting the machining path is conducted in an irregular manner, wherein the timing of the adjustment depends on the machining path, in particular, the number of the adjustment during machining the second half of layers is higher than the number of the adjustment during machining the first half of layers.

8. The laser machining method according to one of claims 1 to 7, wherein the timing of the adjustment depends on the geometry of the texture or the geometry of the cavity.

9. The laser machining method according to one of claims 1 to 8, wherein an initial scanning is conducted before the machining and/or a final scanning is conducted after the machining.

10. The laser machining method according to one of claims 1 to 9, wherein cleaning the machined area is conducted before scanning the machined area by the measuring device.

11. The laser machining method according to one of claims 1 to 10, wherein laser source parameters are adapted based on the determined depth deviation.

12. A laser machine tool for engraving a texture or a cavity on a workpiece, in particular a 5-axis laser machine tool, wherein the machine tool includes a machine table for mounting the workpiece thereon and a laser head for emitting a laser beam on the workpiece, wherein the laser beam is directed by a laser galvo scanner integrated in the laser head to reach a defined position on the workpiece, the machine tool further comprises:
a. a processing unit configured to determine before machining a machining path including a sequence of relative positions of the laser head in relation to the workpiece, wherein a plurality of machining layers intended to be machined in succession are calculated, and for each machining layer a plurality of laser toolpaths defining the positions to be ablated by the laser beam are calculated;
b. a control unit configured to apply the defined machining path for ablating the workpiece, wherein the workpiece is ablated layer by layer;
**characterized in that**
the machine tool further comprises a measuring device configured to scan a defined area on the surface of the workpiece to obtain a machined depth at a plurality of positions on the machined area, wherein the control unit is further configured to compare the measured machined depth with a target depth to determine the depth deviation and to recalculate the machining toolpath based on the determined depth deviation.

13. The laser machine tool according to claim 12, wherein the measuring device is a depth sensor, in particular a confocal sensor.

14. The laser machine tool according to claim 12 or 13, wherein the measuring device is arranged on the machine head and controlled by the control unit.
